(19) **Europäisches Patentamt / European Patent Office / Office européen des brevets**

(11) **EP 4 624 421 A1**

(12) **EUROPEAN PATENT APPLICATION**
published in accordance with Art. 153(4) EPC

(43) Date of publication:
01.10.2025 Bulletin 2025/40

(21) Application number: 23894240.3

(22) Date of filing: 13.09.2023

(51) International Patent Classification (IPC):
$C01G\ 53/00$ (2025.01)     $H01M\ 4/505$ (2010.01)
$H01M\ 4/525$ (2010.01)

(52) Cooperative Patent Classification (CPC):
C01G 53/00; H01M 4/505; H01M 4/525;
Y02E 60/10

(86) International application number:
PCT/JP2023/033352

(87) International publication number:
WO 2024/111226 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 JP 2022188173

(71) Applicant: Sumitomo Chemical Company, Limited
Tokyo 103-6020 (JP)

(72) Inventor: TOI, Shinji
Niihama-shi, Ehime 792-8521 (JP)

(74) Representative: Vossius & Partner
Patentanwälte Rechtsanwälte mbB
Siebertstrasse 3
81675 München (DE)

(54) **LITHIUM-METAL COMPLEX OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57) A lithium metal composite oxide that contains at least Li, Ni, and an element M1 which is an alkaline earth metal element, and satisfies (1) and (2).
(1) The Me site occupancy at lithium sites of a layered rock salt crystal structure, determined by Rietveld analysis of the diffraction peaks obtained from powder X-ray diffraction using $CuK\alpha$ radiation, is not more than 4.0%.
(2) The particle strength of the lithium metal composite oxide is greater than 100 MPa but less than 200 MPa.

EP 4 624 421 A1

## Description

[Technical Field]

The present invention relates to a lithium metal composite oxide, a positive electrode active material for a lithium secondary battery, a positive electrode for a lithium secondary battery, and a lithium secondary battery.

Priority is claimed on Japanese Patent Application No. 2022-188173, filed November 25, 2022, the content of which is incorporated herein by reference.

[Background Art]

Lithium metal composite oxides are used as the positive electrode active material for lithium secondary batteries. Much investigation has been conducted into controlling the physical properties of lithium metal composite oxides with the aim of improving the performance of lithium secondary batteries.

For example, Patent Document 1 discloses a lithium nickel manganese cobalt composite oxide having an Me site occupancy of at least 93.0% as a positive electrode active material capable of improving battery characteristics.

[Citation List]

[Patent Document]

[Patent Document 1] JP-A-2020-176051

[Summary of Invention]

[Technical Problem]

As the potential fields of application for lithium secondary batteries continue to develop, further improvements in the rate characteristic of the lithium secondary battery would be desirable.

In this description, the term "rate characteristic" refers to the ratio of the discharge capacity at 3 CA relative to a value of 100% for the discharge capacity at 0.2 CA. The higher this ratio becomes, the more easily the discharge capacity is maintained even when a large current is applied, which is preferable in terms of battery performance.

From the viewpoint of improving the rate characteristic, there remains room for improvement in the lithium metal composite oxides used in lithium secondary batteries.

The present invention has been developed in light of the above circumstances, and has the objects of providing a lithium metal composite oxide, a positive electrode active material for a lithium secondary battery, a positive electrode for a lithium secondary battery, and a lithium secondary battery that are capable of improving the rate characteristic of a lithium secondary battery.

[Solution to Problem]

The present invention includes the following [1] to [9].

[1] A lithium metal composite oxide that contains at least Li, Ni, and an element M1 which is an alkaline earth metal element, and satisfies (1) and (2) below.

(1) The Me site occupancy at lithium sites of a layered rock salt crystal structure, determined by Rietveld analysis of the diffraction peaks obtained from powder X-ray diffraction using CuK$\alpha$ radiation, is not more than 4.0%.

(2) The particle strength of the lithium metal composite oxide is greater than 100 MPa but less than 200 MPa.

[2] The lithium metal composite oxide according to [1], represented by compositional formula (A) shown below:

$$\text{Li}_a\text{Ni}_b\text{M1}_c\text{M2}_{(1-b-c)}\text{O}_2 \ldots \qquad \text{(A)}$$

(wherein the compositional formula (A) satisfies $0.98 \leq a \leq 1.10$, $0.60 \leq b \leq 0.95$ and $0 < c \leq 0.05$, M1 represents the element M1, and M2 represents one or more elements selected from the group consisting of Co, Mn, Fe, Cu, Ti, Al, Zn, Sn, Zr, B, Si, Nb, W, Mo, Ta, S and P.)

[3] The lithium metal composite oxide according to [1] or [2], wherein the amount of the element M1 contained in the lithium metal composite oxide, relative to the total number of moles of elements other than Li and oxygen that constitute the lithium metal composite oxide, is greater than 0 mol% but not more than 5 mol%.

[4] The lithium metal composite oxide according to any one of [1] to [3], having a BET specific surface area of less than 1.0 m$^2$/g.

[5] The lithium metal composite oxide according to any one of [1] to [4], having a 50% cumulative volume particle size D$_{50}$, determined from a volume-based cumulative particle size distribution curve measured using a laser diffraction and scattering method, of greater than 5 μm but less than 20 μm.

[6] The lithium metal composite oxide according to any one of [1] to [5], having a peak indicating maximum heat generation in simultaneous differential thermal and thermogravimetric analysis at 400°C or higher.

[7] A positive electrode active material for a lithium secondary battery containing the lithium metal composite oxide according to any one of [1] to [6].

[8] A positive electrode for a lithium secondary battery containing the positive electrode active material for a lithium secondary battery according to [7].

[9] A lithium secondary battery containing the positive electrode for a lithium secondary battery according to [8].

[Advantageous Effects of Invention]

The present invention is able to provide a lithium metal composite oxide, a positive electrode active material for a lithium secondary battery, a positive electrode for a lithium secondary battery, and a lithium secondary battery that are capable of improving the rate characteristic of a lithium secondary battery.

[Brief Description of Drawings]

FIG. 1 is a schematic structural diagram illustrating one example of a lithium secondary battery.
FIG. 2 is a schematic structural diagram illustrating one example of a lithium secondary battery.

[Description of Embodiments]

Definitions of terminology used in this description are as follows.

A metal composite compound may also be abbreviated as "MCC" in the following description.

A lithium metal composite oxide may also be abbreviated as "LiMO" in the following description.

A cathode active material for a lithium secondary battery may be abbreviated as "CAM" in the following description.

The term "Ni" indicates not standalone nickel metal, but rather the Ni element. This also applies to references to other elements such as Co and Mn.

In a numerical range, an expression "A to B" means "at least A but not more than B". For example, a range of "5 to 15 μm" means a numerical range from at least 5 μm to not more than 15 μm, including the lower limit value of 5 μm and the upper limit value of 15 μm.

The term "lithium secondary battery" indicates a lithium ion secondary battery.

In this description, the method used for measuring the rate characteristic is as follows.

[Measurement of Rate Characteristic]

(Production of Positive Electrode for Lithium Secondary Battery)

The LiMO of an embodiment of the present invention can be used as the CAM. The CAM, a conductive material and a binder are kneaded together in a mass ratio of CAM : conductive material : binder = 92:5:3 (mass ratio) to prepare a paste-like positive electrode mixture. During preparation of this positive electrode mixture, N-methyl-2-pyrrolidone is used as an organic solvent. Acetylene black is used as the conductive material. Polyvinylidene fluoride is used as the binder.

The thus obtained positive electrode mixture is applied to a current collector formed from an Al foil with a thickness of 20 μm and then dried under vacuum at 150°V for 8 hours to obtain a positive electrode for a lithium secondary battery. The surface area of this positive electrode for a lithium secondary battery is 1.65 cm$^2$.

(Production of Lithium Secondary Battery)

The operations below are conducted in a glovebox under an argon atmosphere.

The positive electrode for a lithium secondary battery produced as described above in (Production of Positive Electrode for Lithium Secondary Battery) is placed within the lower lid of a part for a coin-shaped battery R2032 (manufactured by Hohsen Corporation) with the aluminum foil surface facing downward, and a separator (a porous film of polyethylene) is then placed on top of the positive electrode. Next, 300 μl of an electrolyte solution is injected into the lower lid. The electrolyte solution used is a solution prepared by dissolving 1.0 mol/l of $LiPF_6$ in a mixed solution containing ethylene carbonate, dimethyl carbonate and ethyl methyl carbonate in a ratio of 30:35:35 (volumetric ratio).

Next, using metallic lithium as the negative electrode, the negative electrode is placed on top of the separator, the upper lid is fitted via a gasket, and the assembly is sealed with a caulking machine to complete production of the lithium secondary battery (coin half cell R2032).

Using the lithium secondary battery produced by the method described above, the rate characteristic was measured using the following method.

(Rate Characteristic)

A "high rate characteristic" means a discharge capacity percentage obtained in the discharge rate test described below of 80% or higher.

(Discharge Rate Test)

Test temperature: 25°C
Maximum voltage during charging: 4.3 V, charging current 0.2 CA, constant current and constant voltage charging
Minimum voltage during discharging: 2.5 V, discharge current: 0.2 CA or 3 CA, constant current discharge

Using the discharge capacity upon constant current discharge at 0.2 CA and the discharge capacity upon constant current discharge at 3 CA, the 3 CA / 0.2 CA discharge capacity ratio was determined using the formula shown below, and used as an indicator of the rate characteristic.

$$3 \text{ CA / 0.2 CA discharge rate characteristic (\%)} =$$

$$\text{discharge capacity at 3 CA / discharge capacity at 0.2 CA} \times 100 \qquad \text{(formula)}$$

<LiMO>

The elements that constitute the LiMO include at least Li, Ni and the element M1. The LiMO may also include the element M2.

The element M1 is an alkaline earth metal element. Specifically, the element M1 is at least one element selected from the group consisting of Mg, Ca, Sr, Ba and Ra. The element M2 is at least one element selected from the group consisting of Co, Mn, Fe, Cu, Ti, Al, Zn, Sn, Zr, B, Si, Nb, W, Mo, Ta, S and P.

The element M1 is preferably at least one element selected from the group consisting of Mg, Ca and Ba, and Mg is particularly preferred. The element M2 is preferably at least one element selected from the group consisting of Co, Mn, Ti, Al, Zr, B, Nb, and W. Further, it is preferable that the element M2 definitely includes at least one element selected from the group consisting of Co, Mn and Al, and may further include one or more elements selected from the group consisting of Fe, Cu, Ti, Zn, Sn, Zr, B, Si, Nb, W, Mo, Ta, S and P.

<<Crystal Structure>>

The LiMO has a layered rock salt crystal structure.

A "layered rock salt crystal structure" is a crystal structure in which lithium layers and transition metal layers other than lithium are layered alternately with layers of oxygen sandwiched between the metal layers. The transition metal layers are composed of transition metal ions, and the layers of oxygen are composed of oxygen ions. A typical layered rock salt crystal structure is an $\alpha$-$NaFe_2O_2$ type crystal structure.

The LiMO is more preferably a hexagonal crystal structure or a monoclinic crystal structure.

Hexagonal crystal structures belong to one space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm and P63/mmc.

Further, monoclinic crystal structures belong to one space group selected from the group consisting of P2, P21, C2, Pm, Pc, Cm, Cc, P2/m, P21/m, C2/m, P2/c, P21/c and C2/c.

Among these space groups, in order to obtain a lithium secondary battery having a high initial discharge capacity and a high rate characteristic, the LiMO preferably has a hexagonal crystal structure belonging to the space group R-3m, or a monoclinic crystal structure belonging to the space group C2/m.

[Method for Confirming Crystal Structure]

The crystal structure of the LiMO can be confirmed by observation using a powder X-ray diffraction measurement device.

An X-ray diffraction device such as Ultima IV manufactured by Rigaku Corporation can be used for the powder X-ray diffraction measurement.

LiMO contains the element M1, which is an alkaline earth metal element. In a layered rock salt crystal structure, the element M1 contained in the LiMO exists in a solid solution within the transition metal layer. The element M1 in the transition metal layer exists with a valence of 2, enabling oxygen atoms within the crystal structure to be distributed unevenly. As a result, the affinity with the transition metal element improves, making Ni less mobile, and therefore nickel ions are less likely to migrate to the lithium sites. This reduces the proportion of cation mixing, enabling the LiMO to satisfy the above condition (1).

The LiMO is particulate, and satisfies the following conditions (1) and (2).

(1) The LiMO has a Me site occupancy at lithium sites of the layered rock salt crystal structure, determined by Rietveld analysis of the diffraction peaks obtained from powder X-ray diffraction using CuK$\alpha$ radiation, of not more than 4.0%.

The above Me refers to elements other than Li and oxygen that constitute the LiMO. Specifically, Me refers to Ni and the abovementioned elements M1 and M2.

The Me site occupancy is preferably not more than 3.9%, and more preferably 3.6% or lower.

Provided the Me site occupancy is not more than the above upper limit, the proportion of cation mixing is low, and lithium ions are retained in the lithium sites, meaning the rate characteristic tends to be higher.

Although the Me site occupancy is preferably as low as possible, the lower limit may be, for example, at least 1.0%, at least 2.0%, or 3.0% or higher.

The Me site occupancy is preferably within a range from 1.0 to 4.0%, more preferably from 2.0 to 3.9%, and even more preferably from 3.0 to 3.6%.

[Method for Measuring Me Site Occupancy]

The Me site occupancy at lithium sites can be calculated by Rietveld analysis of the diffraction peaks obtained from powder X-ray diffraction. Rietveld analysis is a technique for comparing the powder X-ray diffraction pattern from actual measurements with a simulation pattern from the crystal structure model, and then optimizing crystal structure parameters in the crystal structure model to minimize differences between the two patterns.

The diffraction peaks can be acquired by conducting powder X-ray diffraction measurements using an X-ray diffraction apparatus. The D8 Advance manufactured by Bruker Corporation is used as the X-ray diffraction apparatus. More specifically, the LiMO is used to fill a special substrate, and CuK$\alpha$ radiation is used to conduct measurements under conditions including a diffraction angle 2θ = 10 to 90° and a sampling width of 0.02°, thus obtaining a powder X-ray diffraction pattern.

Next, the diffraction peaks in the powder X-ray diffraction pattern are subjected to Rietveld analysis and the LiMO is expressed as a layered rock salt crystal structure $(Li_{1-n}Me_n)(Me_{1-n}Li_n)O_2$ as an initial crystal structure model, and an optimization is then performed for n, which represents the Me site occupancy. Powder X-ray analysis software TOPAS from Bruker Corporation is used for the Rietveld analysis.

(2)
The particle strength of the LiMO is greater than 100 MPa but less than 200 MPa.

[Method for Measuring Particle Strength]

The particle strength of the LiMO is measured using the following method.

First, particles of the LiMO having a size of about $D_{50}$ (units: μm) $\pm$ 2 μm are selected. During the selection process, particles with extremely irregular shapes are avoided. Specifically, particles having a ratio between the minor axis and the major axis (minor axis/major axis) of at least 0.7 but not more than 1.3 are selected. The value of $D_{50}$ is measured as per the following description entitled [Method for Measuring $D_{50}$].

The "major axis" means the longest diameter of the particle. The "minor axis" means the shortest diameter of the particle. Next, a test pressure (load) is applied to one of the selected LiMO particles, and the amount of displacement of the LiMO particle is measured.

A Micro Compression Tester MCT-510 manufactured by Shimadzu Corporation is used for the measurement.

The test pressure is gradually increased, and the pressure value which yields the maximum amount of displacement with the test pressure substantially constant is deemed the test pressure (P) (units: MPa).

Based on this obtained test pressure (P), the crushing strength (St) (units: MPa) is calculated using the following formula (X) (see Journal of the Mining Industry of Japan, Vol. 81, (1965)). This operation is repeated a total of seven times, and the average value of the five repetitions excluding the maximum and minimum values for the crushing strength is calculated as the particle strength. In the following formula (X), d represents the LiMO secondary particle diameter (units: $\mu$m).

$$St = 2.8 \times P/(\pi \times d \times d) \qquad \text{... formula (X)}$$

The LiMO particle strength is preferably at least 105 MPa, and more preferably 110 MPa or higher.

The LiMO particle strength may be, for example, not more than 190 MPa, or 180 MPa or lower.

The particle strength is preferably within a range from 105 to 190 MPa, and more preferably from 110 to 180 MPa.

When a LiMO with a particle strength within the above range is used as the CAM, the CAM particles are less likely to crack in the press process during production of the electrode. Accordingly, cracks that can cause resistance are less likely to occur, and the rate characteristic is less likely to deteriorate.

The LiMO is preferably represented by the compositional formula (A) shown below.

$$\text{Li}_a\text{Ni}_b\text{M1}_c\text{M2}_{(1-b-c)}\text{O}_2 \text{ ...} \qquad \text{(A)}$$

(The compositional formula (A) satisfies $0.98 \leq a \leq 1.10$, $0.60 \leq b \leq 0.95$ and $0 < c \leq 0.05$, M1 represents the element M1, and M2 represents the element M2.)

(a) In the compositional formula (A), a is preferably at least 0.98, more preferably at least 0.99, and even more preferably 1.00 or greater. Further, a is preferably not more than 1.09, more preferably not more than 1.08, and even more preferably 1.07 or less. From the viewpoint of increasing the rate characteristic of the lithium secondary battery, a preferably satisfies $0.98 \leq a \leq 1.09$, more preferably satisfies $0.99 \leq a \leq 1.08$, even more preferably satisfies $1.00 \leq a \leq 1.08$, and still more preferably satisfies $1.00 \leq a \leq 1.07$.

(b) In the compositional formula (A), b is preferably at least 0.65, more preferably at least 0.70, and even more preferably 0.75 or higher. Further, b is preferably not more than 0.93. From the viewpoint of increasing the rate characteristic of the lithium secondary battery, b preferably satisfies $0.65 \leq b \leq 0.95$, more preferably satisfies $0.70 \leq b \leq 0.95$, and even more preferably satisfies $0.75 \leq b \leq 0.93$.

(c) In the compositional formula (A), c is preferably at least 0.001, and more preferably at least 0.002. Further, c is preferably not more than 0.04. From the viewpoint of increasing the rate characteristic of the lithium secondary battery, c preferably satisfies $0.001 \leq c \leq 0.05$, and more preferably satisfies $0.002 \leq c \leq 0.04$.

The LiMO is preferably represented by the compositional formula (A1) shown below.

$$\text{Li}_a\text{Ni}_b\text{M1}_c\text{M2}_{(1-b-c)}\text{O}_2 \text{ ...} \qquad \text{(A1)}$$

(The compositional formula (A1) satisfies $1.00 \leq a \leq 1.08$, $0.75 \leq b \leq 0.93$ and $0.001 \leq c \leq 0.05$, M1 is at least one element selected from the group consisting of Mg, Ca and Ba, M2 definitely includes at least one element selected from the group consisting of Co, Mn and Al, and may further include one or more elements selected from the group consisting of Fe, Cu, Ti, Zn, Sn, Zr, B, Si, Nb, W, Mo, Ta, S and P.)

From the viewpoint of improving the rate characteristic, the amount of the element M1 in the LiMO, relative to the total number of moles of elements other than Li and oxygen that constitute the LiMO (for example, Ni, the element M1 and the element M2), is preferably greater than 0 mol% but not more than 5 mol%, and is more preferably greater than 0 mol% but not more than 2 mol%.

[Compositional Analysis]

Compositional analysis of the LiMO (to determine the above compositional formula (A) and the amount of the element M1) can be conducted by dissolving the obtained LiMO powder in hydrochloric acid, and then conducting measurements using an ICP emission spectrophotometer.

For example, an SPS3000 apparatus manufactured by SII NanoTechnology Inc. can be used as the ICP emission spectrophotometer.

The BET specific surface area of the LiMO is preferably less than $1.0 \, m^2/g$, more preferably not more than $0.99 \, m^2/g$, and even more preferably $0.98 \, m^2/g$ or lower.

The BET specific surface area of the LiMO is preferably at least $0.5 \, m^2/g$, more preferably at least $0.6 \, m^2/g$, and even more preferably $0.7 \, m^2/g$ or greater.

The BET specific surface area is preferably at least $0.5 \, m^2/g$ but less than $1.0 \, m^2/g$, more preferably within a range from 0.6 to $0.99 \, m^2/g$, and even more preferably from 0.7 to $0.98 \, m^2/g$.

By ensuring that the BET specific surface area falls within the above range, the rate characteristic of the lithium secondary battery can be more easily improved.

[BET Specific Surface Area Measurement]

The BET specific surface area of the LiMO can be measured using a BET specific surface area measurement device. For example, a Macsorb (a registered trademark) device manufactured by Mountech Co., Ltd. can be used as the BET specific surface area measurement device. The LiMO is preferably dried at 105° for 30 minutes in a nitrogen atmosphere as a pretreatment.

The $D_{50}$ value for the LiMO is preferably greater than $5 \, \mu m$, and more preferably $10 \, \mu m$ or greater. Further, $D_{50}$ is preferably less than $20 \, \mu m$, and more preferably $15 \, \mu m$ or less. The $D_{50}$ value is preferably greater than $5 \, \mu m$ but less than $20 \, \mu m$, and more preferably within a range from 10 to $15 \, \mu m$. The $D_{50}$ value is the 50% cumulative volume particle size determined from a volume-based cumulative particle size distribution curve that is obtained by measurement using a laser diffraction and scattering method.

A LiMO having a $D_{50}$ value that satisfies the above range means a LiMO in which crystal growth has proceeded. This type of LiMO has many exposed surfaces at which desorption and insertion of lithium ions can occur favorably, meaning desorption and insertion of lithium ions proceeds smoothly, resulting in a higher rate characteristic.

[Method for Measuring $D_{50}$]

In this description, $D_{50}$ for the LiMO can be measured using the following method.

First, 2 g of the powdered LiMO is placed in 50 ml of a 0.2% by mass aqueous solution of sodium hexametaphosphate, and a dispersion containing the dispersed LiMO is obtained.

Subsequently, the particle size distribution of the obtained dispersion is measured using a laser diffraction particle size distribution analyzer, thus obtaining a volume-based cumulative particle size distribution curve. In this obtained cumulative particle size distribution curve, the particle size value at the point where the cumulative volume reaches 50% from the fine particle side is $D_{50}$ ($\mu m$).

For example, an MS2000 analyzer manufactured by Malvern Instruments Inc. can be used as the laser diffraction particle size distribution analyzer.

In simultaneous differential thermal and thermogravimetric analysis, the LiMO preferably has a peak indicating maximum heat generation at 400°C or higher. The peak temperature indicating maximum heat generation is more preferably within a range from 400 to 500°C, and even more preferably from 400 to 450°C. Provided the peak temperature indicating the maximum heat generation falls within the above range, the rate characteristic of the lithium secondary battery can be more easily improved. The peak indicating the maximum heat generation refers to the peak with the highest peak height in the DTA curve described below. The simultaneous differential thermal and thermogravimetric analysis of LiMO is conducted using the following method.

[Method for Simultaneous Differential Thermal and Thermogravimetric Analysis]

An STA7300 device manufactured by Hitachi High-Tech Science Corporation can be used as the measurement device for the simultaneous differential thermal and thermogravimetric analysis.

Sample weighing is conducted on the balance beam of the STA7300.

Approximately 5 mg of the LiMO is placed in a platinum measurement container and set in the above measurement device, and the temperature is raised from 20 to 700°C at a rate of temperature increase of 5°C/min under a stream of nitrogen of 5 ml/min, thus obtaining a DTA curve. The peak indicating the maximum heat generation is identified from the peak heights of the obtained DTA curve. Considering the measurement amount, the rate of temperature increase, and the measurement temperature range, the effect of particle size on the weight loss is small, and therefore in tis embodiment, there are no particular limitations on the particle size in the sample.

<Method for Producing LiMO>

The method for producing the LiMO preferably includes a step of obtaining an MCC, and a step of obtaining the LiMO. The step of obtaining an MCC and the step of obtaining the LiMO are described below in this order.

[MCC Production Step]

First, an MCC containing at least Ni is prepared.

The MCC can be produced by a batch co-precipitation method or a continuous co-precipitation method. The production method will be described below in detail using, as an example, a metal composite oxide containing Ni and an abovementioned element M2.

First, a nickel salt solution, a metal salt solution containing the element M2, and if necessary a complexing agent are reacted using a coprecipitation method, in particular the continuous coprecipitation method disclosed in JP-A-2002-201028, thus producing a metal composite hydroxide represented by $Ni_bM2_{(1-b)}(OH)_2$ (wherein b is the same as b in the compositional formula (A)).

Examples of nickel salts that may be used as the solute of the nickel salt solution include at least one salt from among nickel sulfate, nickel nitrate, nickel chloride and nickel acetate.

Examples of the metal salt that represents the solute of the metal salt solution containing the element M2 include sulfates, chlorides, acetates and hydroxides of the element M2.

Examples of cobalt salts that may be used as the solute of the cobalt salt solution include at least one salt from among cobalt sulfate, cobalt nitrate, cobalt chloride and cobalt acetate.

Examples of manganese salts that may be used as the solute of the manganese salt solution include at least one salt from among manganese sulfate, manganese nitrate, manganese chloride and manganese acetate.

Examples of aluminum salts that may be used as the solute of the aluminum salt solution include aluminum sulfate and sodium aluminate.

The metal salts described above are used in a ratio that corresponds with the compositional ratio of the above $Ni_bM2_{(1-b)}(OH)_2$. Water is used as the solvent.

The complexing agent is a compound that is capable of forming a complex with nickel ions and ions of the element M2 in an aqueous solution. Examples of the complexing agent include ammonium ion donors, hydrazine, ethylenediaminetetraacetic acid, nitrilotriacetic acid, uracildiacetic acid, and glycine.

Examples of the ammonium ion donors include ammonium salts such as ammonium hydroxide, ammonium sulfate, ammonium chloride, ammonium carbonate and ammonium fluoride.

A complexing agent need not be included. In those cases where a complexing agent is included, the amount of the complexing agent included in the solution containing the nickel salt solution, the metal salt solution containing the element M2, and the complexing agent, for example expressed as a molar ratio of the amount of the complexing agent relative to the total number of moles of metal salts included in the solutions, is greater than 0 but not more than 2.0.

During the co-precipitation method, in order to adjust the pH value of the above solution, an alkaline aqueous solution is added to the solution before the pH of the solution changes from alkaline to neutral. Examples of alkaline aqueous solutions that may be used include a sodium hydroxide aqueous solution or a potassium hydroxide aqueous solution.

In this description, the pH value is defined as the value measured when the temperature of the solution is 40°C. In those cases where the temperature of the solution sampled from the reaction tank is higher or lower than 40°C, the pH of the solution is measured following heating or cooling of the solution to 40°C.

During the reaction, the temperature of the reaction tank is controlled, for example, within a range from 20 to 80°C, and preferably from 30 to 70°C.

Further, during the reaction, the pH value of the solution inside the reaction tank is controlled, for example, within a range from 9 to 13, and preferably from 11 to 13.

The materials inside the reaction tank are stirred appropriately and mixed.

In order to enable separation of the formed reaction precipitate, an overflow type reaction tank may be used as the reaction tank used in the continuous coprecipitation method.

In order to achieve the desired atmosphere inside the reaction tank, a prescribed gas may be passed through the reaction tank or bubbled directly through the reaction solution.

Following the reaction, the obtained reaction precipitate is washed with water, dewatered, isolated, and then dried to obtain a metal composite hydroxide. Further, if necessary, the reaction precipitate may also be washed with a weak acid solution or an alkaline solution containing sodium hydroxide or potassium hydroxide.

Following drying, the metal composite hydroxide may be subjected to appropriate classification.

The obtained metal composite hydroxide is then oxidized (oxidation step) to obtain the metal composite oxide MCC. By using this metal composite oxide, the Me site occupancy of the obtained LiMO can be adjusted to a value within the range prescribed for an embodiment of the present invention.

The oxidation time from the start of the temperature increase until the desired temperature has been reached and then held for a prescribed period is preferably within a range from 2 to 10 hours.

The oxidation temperature is preferably within a range from 500 to 800°C.

In the oxidation step, various gases including inert gases such as nitrogen, argon and carbon dioxide, oxidizing gases such as air and oxygen, or mixed gases thereof, may be supplied to the reaction tank to control the oxidation state of the metal composite oxide.

Furthermore, in the oxidation step, oxidizing agents including peroxides such as hydrogen peroxide, peroxide salts such as permanganate salts, perchlorate salts, hypochlorite salts, nitric acid, halogens, and ozone may also be used.

By appropriate adjustment of the MCC production conditions, the $D_{50}$ value for the obtained LiMO can be adjusted to a value within the range prescribed for an embodiment of the present invention.

[Step of Obtaining LiMO]

The step of obtaining the LiMO includes a mixing step of mixing the MCC, a lithium compound, and a compound containing the element M1, and a calcining step of calcining the resulting mixture.

- Mixing Step

The MCC, a lithium compound and a compound containing the element M1 are mixed.

The lithium compound may use at least one of lithium carbonate, lithium nitrate, lithium acetate, lithium hydroxide, lithium hydroxide hydrate, lithium oxide, lithium chloride, and lithium fluoride. Among these, any one of lithium hydroxide, lithium hydroxide hydrate and lithium carbonate or a mixture thereof is preferred.

The compound containing the element M1 is preferably a hydroxide, and may use, for example, at least one of barium hydroxide, calcium hydroxide, magnesium hydroxide, strontium hydroxide and radium hydroxide. The compound containing the element M1 is preferably a compound containing mainly the element M1, wherein the expression "containing mainly the element M1" indicates containing the element M1 in an amount exceeding 50% by mass of the total mass of the compound containing the element M1.

The compound containing the element M1 preferably has a particle size, calculated from the BET specific surface area, of not more than 2,000 nm. Further, the particle size calculated from the BET specific surface area is preferably at least 200 nm.

[Measurement of Particle Size of Compound Containing Element M1]

The particle size of the compound containing the element M1, calculated from the BET specific surface area, can be determined using the method described below.

First, the compound containing the element M1 is dried in a nitrogen atmosphere at 105°C for 30 minutes, and the BET specific surface area can then be measured using a BET specific surface area measurement device. For example, Macsorb (a registered trademark) manufactured by Mountech Co., Ltd. can be used as the BET specific surface area measurement device.

The particle size is calculated from the obtained BET specific surface area using the following formula.

$$\text{Particle size (nm)} = 6/(S \times P) \qquad \text{(formula)}$$

In the above formula, P represents the density ($g/m^3$) of the compound containing the element M1, and S represents the BET specific surface area ($m^2/g$) of the compound containing the element M1.

The lithium compound and the MCC are mixed with due consideration of the compositional ratio of the final target product to obtain a mixture containing the lithium compound and the MCC. The amount (molar ratio) of Li contained in the lithium compound relative to a value of 1 representing the total amount of elements other than oxygen in the MCC (for example, Ni, the element M1 and the element M2) is preferably within a range from 0.90 to 1.10, more preferably from 0.91 to 1.10, and even more preferably from 0.92 to 1.10.

The compound containing the element M1 is mixed such that the percentage of the element M1 contained in the compound containing the element M1 relative to the total number of moles of elements other than oxygen contained in the MCC (for example, Ni, the element M1 and the element M2) is preferably greater than 0 mol% but not more than 5 mol%, and more preferably greater than 0 mol% but not more than 2 mol%. The percentage of the element M1 is preferably lower for elements having a larger element number in the periodic table.

In those cases where the compound containing the element M1 is a compound containing mainly Mg, mixing is conducted such that the percentage of Mg in the compound containing Mg relative to the total number of moles of elements other than oxygen contained in the MCC is preferably at least 0.3 mol% but less than 1 mol%, and more preferably within a range from 0.3 to 0.9 mol%.

In those cases where the compound containing the element M1 is a compound containing mainly Ca, mixing is conducted such that the percentage of Ca in the compound containing Ca relative to the total number of moles of elements other than oxygen contained in the MCC is preferably within a range from 0.1 to 2 mol%, and more preferably from 0.3 to 1.5 mol%.

In those cases where the compound containing the element M1 is a compound containing mainly Ba, mixing is conducted such that the percentage of Ba in the compound containing Ba relative to the total number of moles of elements other than oxygen contained in the MCC is preferably greater than 0.5 mol% but not more than 5 mol%, and more preferably within a range from 0.6 to 5 mol%.

In the present invention, by controlling the particle size of the compound containing the element M1, the amount added of the compound containing the element M1, the amount added of the lithium compound, and the firing conditions described below, a LiMO that satisfies the conditions (1) and (2) can be produced. Moreover, by controlling these conditions, a LiMO can be produced which has a peak indicating maximum heat generation at 400°C or higher in simultaneous differential thermal and thermogravimetric analysis.

- Calcining Step

The mixture of the MCC, the lithium compound, and the compound containing the element M1 is calcined to obtain the LiMO. When calcining is conducted in the presence of the compound containing the element M1, calcining is promoted, and a LiMO satisfying condition (2) is obtained. During the calcining process, dry air, an oxygen atmosphere, or an inert atmosphere or the like is used depending on the desired composition. In this embodiment of the present invention, calcining in an oxygen atmosphere is preferred.

The calcining step may include only one calcining, or may include a plurality of calcining stages.

In those cases where a plurality of calcining stages are conducted, the step that involves calcining at the highest temperature is deemed the main calcining. A preliminary calcining at a temperature lower than that of the main calcining may be conducted prior to the main calcining.

In one embodiment of the present invention, it is preferable that a preliminary calcining is conducted first, and the main calcining then conducted thereafter. Both the preliminary calcining and the main calcining are preferably conducted under an oxygen atmosphere.

The calcining temperature during the preliminary calcining is preferably within a range from 600 to 900°C, more preferably from 610 to 850°C, and even more preferably at least 620°C but less than 700°C. Provided the calcining temperature falls within this range, a LiMO that satisfies conditions (1) and (2) can be produced.

The calcining temperature during the main calcining is preferably within a range from 600 to 900°C, more preferably from 650 to 850°C, and even more preferably from 700 to 820°C. Provided the calcining temperature falls within this range, a LiMO that satisfies conditions (1) and (2) can be produced.

The holding times for the preliminary calcining and main calcining are preferably each within a range from 1 to 50 hours, and more preferably from 2 to 20 hours. Provided the holding times fall within this range, a LiMO that satisfies conditions (1) and (2) can be produced.

In this description, the "calcining temperature" means the temperature of the atmosphere inside the calcining furnace, and indicates the maximum temperature. Examples of calcining furnaces that may be used include continuous calcining furnaces and flow-type calcining furnaces. Examples of the continuous calcining furnaces include tunnel furnaces and roller hearth kilns. Examples of the flow-type calcining furnaces include rotary kilns.

By adjusting the calcining conditions in the calcining step, the BET specific surface area of the LiMO can be adjusted to a value within the range prescribed in this embodiment of the present invention.

Performing the steps described above enables the LiMO to be obtained.

<CAM>

The CAM of an embodiment of the present invention contains the LiMO produced using the method described above. In the CAM, the amount of the LiMO relative to the total mass of the CAM (100% by mass) is preferably within a range from 70 to 99% by mass, and more preferably from 80 to 98% by mass.

The amount of the LiMO relative to the total mass of the CAM is determined using an SEM (for example, JSM-5510 manufactured by JEOL Ltd.), by irradiating the CAM with an electron beam at an accelerating voltage of 20 kV and performing SEM observation. The magnification of the SEM photograph is adjusted so that 200 to 400 of the target CAM particles are visible in the SEM photograph. In one example, the magnification may be within a range from 1,000 times to 30,000 times.

<Lithium Secondary Battery>

A positive electrode for a lithium secondary battery suitable for the case where the LiMO described above is used as the CAM is described below. Hereinafter, the positive electrode for the lithium secondary battery may sometimes be referred to as simply the positive electrode.

Moreover, a lithium secondary battery that represents an ideal application of the positive electrode is also described.

One example of a lithium secondary battery suitable for the case where the LiMO described above is used as the CAM includes a positive electrode and a negative electrode, a separator sandwiched between the positive electrode and the negative electrode, and an electrolyte solution located between the positive electrode and the negative electrode.

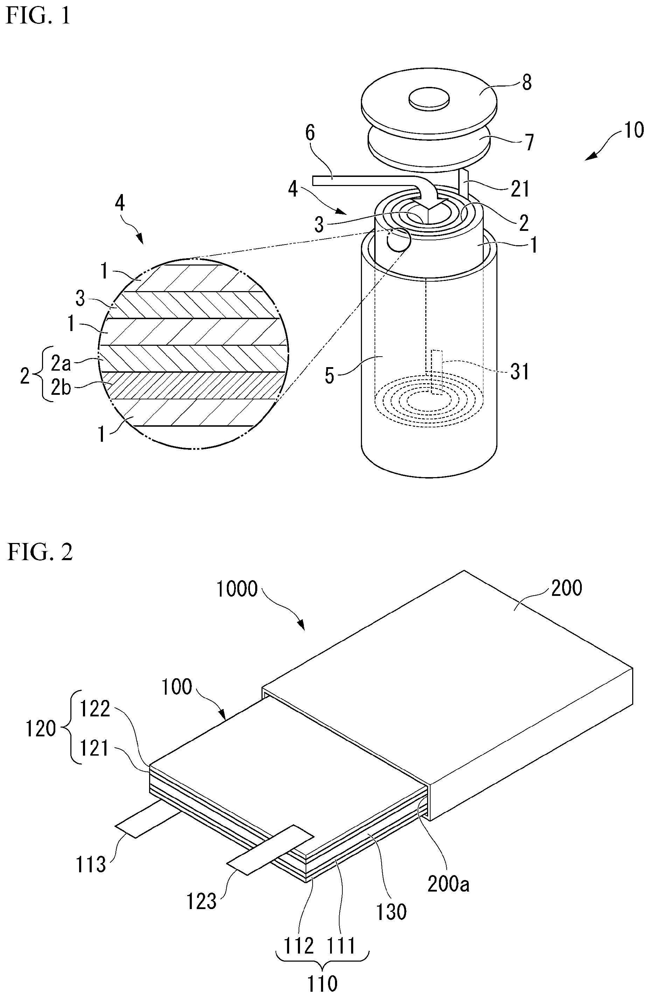

FIG. 1 is a schematic diagram illustrating one example of a lithium secondary battery. For example, a cylindrical lithium secondary battery 10 is produced in the following manner.

First, as illustrated in the partially enlarged view of FIG. 1, a pair of strip-shaped separators 1, a strip-shaped positive electrode 2 having a positive electrode lead 21 at one end, and a strip-shaped negative electrode 3 having a negative electrode lead 31 at one end are stacked in the order of separator 1, positive electrode 2, separator 1, negative electrode 3, and this stacked structure is then wound to form an electrode group 4.

The positive electrode 2 has, in one example, a positive electrode active material layer 2a containing the CAM and a positive electrode current collector 2b on one surface of which the positive electrode active material layer 2a is formed. This type of positive electrode 2 can be produced by first preparing a positive electrode mixture containing the CAM, a conductive material and a binder, and then supporting the positive electrode mixture on one surface of the positive electrode current collector 2b to form the positive electrode active material layer 2a.

Examples of the negative electrode 3 include an electrode in which a negative electrode mixture containing a negative electrode active material (not shown in the drawing) is supported on a negative electrode current collector, and an electrode formed from a standalone negative electrode active material, and this negative electrode 3 can be produced in the same manner as the positive electrode 2.

Subsequently, the electrode group 4 and an insulator (not shown in the drawing) are housed in the battery can 5, the bottom of the can is sealed, and the electrode group 4 is impregnated with an electrolyte solution 6, thereby disposing the electrolyte between the positive electrode 2 and the negative electrode 3. Production of the lithium secondary battery 10 can then be completed by subsequently sealing the top of the battery can 5 with a top insulator 7 and a sealing body 8.

Examples of the shape of the electrode group 4 include columnar shapes which, when cut perpendicularly to the winding axis of the electrode group 4, have a cross-sectional shape that is circular, elliptical, rectangular, or rectangular with rounded corners.

Further, the shape of the lithium secondary battery having this type of electrode group 4 may employ any shape prescribed in IEC 60086, a standard for batteries established by the International Electrotechnical Commission (IEC), or any shape prescribed in JIS C 8500. Examples of these shapes include cylindrical shapes and rectangular shapes.

Moreover, the lithium secondary battery is not limited to the wound configuration described above, and may also have a laminated configuration in which a laminated structure of a positive electrode, a separator, a negative electrode and a separator is stacked in a repeating arrangement. Examples of such laminated lithium secondary batteries include so-called coin batteries, button batteries, and paper (or sheet) batteries.

The positive electrode, separator, negative electrode and electrolyte solution that constitute the lithium secondary battery may, for example, use the configurations, materials and production methods disclosed in paragraphs [0113] to [0140] of WO2022/113904A1.

<All-Solid-State Lithium Secondary Battery>

The LiMO described above can also be used as the CAM of an all-solid-state lithium secondary battery.

FIG. 2 is a schematic diagram illustrating one example of an all-solid-state lithium secondary battery. The all-solid-state lithium secondary battery 1000 illustrated in FIG. 2 contains a laminate 100 having a positive electrode 110, a negative electrode 120 and a solid electrolyte layer 130, and an external case 200 that houses the laminate 100. Further, the all-solid-state lithium secondary battery 1000 may also have a bipolar structure in which a CAM and a negative electrode active material are disposed on the two sides of a current collector. One specific example of a bipolar structure is the structure disclosed in JP-A-2004-95400.

The positive electrode 110 has a positive electrode active material layer 111 and a positive electrode current collector 112. The positive electrode active material layer 111 contains the CAM described above and the solid electrolyte. Further, the positive electrode active material layer 111 may also contain a conductive material and a binder.

The negative electrode 120 has a negative electrode active material layer 121 and a negative electrode current collector 122. The negative electrode active material layer 121 contains a negative electrode active material. Further, the negative electrode active material layer 121 may also contain a solid electrolyte and a conductive material.

The laminate 100 may have an external terminal 113 connected to the positive electrode current collector 112 and an external terminal 123 connected to the negative electrode current collector 122. In addition, the all-solid-state lithium secondary battery 1000 may have a separator between the positive electrode 110 and the negative electrode 120.

The all-solid-state lithium secondary battery 1000 also has an insulator (not shown in the drawing) that insulates the laminate 100 from the external case 200, and a sealing body (not shown in the drawing) that seals the opening 200a of the external case 200.

A container molded from a metal material with superior corrosion resistance such as aluminum, stainless steel, or nickel-plated steel may be used as the external case 200. Alternatively, a container formed from a laminate film that has been subjected to a corrosion resistance treatment on at least one surface and then processed into a bag shape may also be used as the external case 200.

Examples of the shape of the all-solid-state lithium secondary battery 1000 include coin-type, button-type, paper (or sheet-type), cylindrical, square, and laminate-type (pouch-type) batteries.

The all-solid-state lithium secondary battery 1000 is illustrated using a configuration having a single laminate 100 as one example, but embodiments of the present invention are not limited to this particular configuration. The all-solid-state lithium secondary battery 1000 may also have a configuration in which the laminate 100 acts as a unit cell, and a plurality of these unit cells (laminates 100) are housed inside the exterior case 200.

The all-solid-state lithium secondary battery may, for example, use the configurations, materials and production methods disclosed in paragraphs [0141] to [0181] of WO2022/113904A1.

[Examples]

The present invention is described below in further detail using a series of examples.

<Measurements of Various Parameters>

Measurements of various parameters of the LiMO produced using the methods described below were conducted as described above in the sections entitled [Method for Measuring Me Site Occupancy], [Compositional Analysis], [Method For Measuring Particle Strength], [BET Specific Surface Area Measurement], [Method for Simultaneous Differential Thermal and Thermogravimetric Analysis], and [Method for Measuring $D_{50}$]. Particle sizes calculated from the BET specific surface area values for barium hydroxide, calcium hydroxide and magnesium hydroxide were measured as described above in the section entitled [Measurement of Particle Size of Compound Containing Element M1].

<Method for Measuring Rate Characteristic>

Evaluation of the rate characteristic of the lithium secondary batteries was conducted in the manner described above in the section entitled [Measurement of Rate Characteristic], using the LiMO obtained by the production method described below as a CAM.

<Example 1>

A reaction tank fitted with a stirrer and an overflow pipe was charged with water, an aqueous sodium hydroxide solution was then added, and the liquid temperature (temperature of the reaction tank) was held at 70°C.

A mixed solution 1 was prepared by mixing an aqueous solution of nickel sulfate, an aqueous solution of manganese sulfate, and an aqueous solution of aluminum sulfate in amounts that yielded a molar ratio of Ni:Mn:Al of 93:3.5:3.5.

The mixed solution 1 and an aqueous solution of ammonium sulfate as a complexing agent were added continuously to the reaction tank under a stream of nitrogen and under constant stirring. An aqueous solution of sodium hydroxide was then added dropwise at a suitable time to adjust the pH of the solution inside the reaction tank to 10.7 (measurement temperature: 40°C), thus obtaining a reaction precipitate 1.

The reaction precipitate 1 was washed using a mass of a 5% by mass aqueous solution of sodium hydroxide that was 20 times the mass of the reaction precipitate 1. Following washing, the precipitate was dewatered using a centrifuge, washed with water, dewatered again, isolated, and dried at 105°C for 20 hours, yielding a metal composite hydroxide 1 containing Ni, Mn, and Al.

The metal composite hydroxide 1 was oxidized in an air atmosphere at 650°C for 5 hours to obtain a metal composite oxide MCC-1.

Sufficient lithium hydroxide monohydrate was weighed to provide a ratio (molar ratio) of the amount of Li relative to a value of 1 for the total amount of Ni, Mn and Al contained in the MCC-1 of 1.02.

Sufficient barium hydroxide was weighed to provide an amount of Ba of 5.0 mol% relative to a value of 1 for the total amount of Ni, Mn and Al contained in the MCC-1.

The MCC-1, the lithium hydroxide monohydrate, and the barium hydroxide were mixed to obtain a mixture 1. The particle size of the barium hydroxide used, calculated from the BET specific surface area, was 1,202 nm.

Subsequently, the obtained mixture 1 was subjected to preliminary calcining under an oxygen atmosphere at 650°C for 5 hours. A main calcining was then conducted under an oxygen atmosphere at 770°C for 5 hours, yielding a powdered LiMO-1.

<Example 2>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.03.

Sufficient calcium hydroxide was weighed to provide an amount of Ca of 1.0 mol% relative to a value of 1 for the total amount of Ni, Mn and Al contained in the MCC-1.

The MCC-1, the lithium hydroxide monohydrate, and the calcium hydroxide were mixed to obtain a mixture 2. The particle size of the calcium hydroxide used, calculated from the BET specific surface area, was 690 nm.

The mixture 2 was subjected to preliminary calcining under an oxygen atmosphere at 650°C for 5 hours. Subsequently, a main calcining was conducted under an oxygen atmosphere at 750°C for 5 hours, yielding a powdered LiMO-2.

<Example 3>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.03.

Sufficient magnesium hydroxide was weighed to provide an amount of Mg of 0.3 mol% relative to a value of 1 for the total amount of Ni, Mn and Al contained in the MCC-1.

The MCC-1, the lithium hydroxide monohydrate, and the magnesium hydroxide were mixed to obtain a mixture 3. The particle size of the magnesium hydroxide used, calculated from the BET specific surface area, was 980 nm.

The mixture 3 was calcined using the same calcining conditions as Example 2, yielding a powdered LiMO-3.

<Comparative Example 1>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.02.

The MCC-1 and the lithium hydroxide monohydrate were mixed to obtain a mixture 4.

The mixture 4 was calcined using the same calcining conditions as Example 1, yielding a powdered LiMO-4.

<Comparative Example 2>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.02.

Sufficient barium hydroxide was weighed to provide an amount of Ba of 0.5 mol% relative to a value of 1 for the total amount of Ni, Mn and Al contained in the MCC-1.

The MCC-1, the lithium hydroxide monohydrate, and the barium hydroxide were mixed to obtain a mixture 5. The particle size of the barium hydroxide used, calculated from the BET specific surface area, was 1,202 nm.

The mixture 5 was calcined using the same calcining conditions as Example 1, yielding a powdered LiMO-5.

<Comparative Example 3>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.02.

Sufficient magnesium hydroxide was weighed to provide an amount of Mg of 1.0 mol% relative to a value of 1 for the total amount of Ni, Mn and Al contained in the MCC-1.

The MCC-1, the lithium hydroxide monohydrate, and the magnesium hydroxide were mixed to obtain a mixture 6. The particle size of the magnesium hydroxide used, calculated from the BET specific surface area, was 980 nm.

The mixture 6 was calcined using the same calcining conditions as Example 2, yielding a powdered LiMO-6.

<Comparative Example 4>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.09.

The MCC-1 and the lithium hydroxide monohydrate were mixed to obtain a mixture 7.

The mixture 7 was calcined using the same calcining conditions as Example 2, yielding a powdered LiMO-7.

<Comparative Example 5>

The MCC-1 was produced in the same manner as Example 1.

Sufficient lithium hydroxide monohydrate was weighed to provide a ratio (molar ratio) of the amount of Li relative to a value of 1 for the total amount of Ni, Mn and Al contained in the MCC-1 of 1.02.

Sufficient barium hydroxide was weighed to provide an amount of Ba of 5.0 mol% relative to a value of 1 for the total amount of Ni, Mn and Al contained in the MCC-1.

The MCC-1, the lithium hydroxide monohydrate, and the barium hydroxide were mixed to obtain a mixture 8. The particle size of the barium hydroxide used, calculated from the BET specific surface area, was 2,106 nm.

The mixture 8 was calcined using the same calcining conditions as Example 2, yielding a powdered LiMO-8.

Various parameters of the LiMO samples obtained in Examples 1 to 3 and Comparative Examples 1 to 5 are shown in Table 1. Further, the results for the rate characteristic values for lithium secondary batteries using the LiMO samples obtained in Examples 1 to 3 and Comparative Examples 1 to 5 are also shown in Table 1. In Table 1, "Amount of Element M1 (%)" describes the percentage of the element M1 relative to the total number of moles of Ni, Mn, Al and the element M1 that constitute the LiMO.

[Table 1]

| | Me site occupancy (%) | Particle strength (MPa) | Amount of Element M1 (mol%) | Peak temperature indicating maximum heat generation (°C) | Compositional formula (A) | | | | | D50 (μm) | BET specific surface area (m²/g) | Rate characteristic (%) |
|---|---|---|---|---|---|---|---|---|---|---|---|---|
| | | | | | a | b | c | M1 | M2 | | | |
| Example 1 | 3.8 | 155 | 5.0 | 436 | 1.02 | 0.93 | 0.050 | Ba | Mn, Al | 14.1 | 0.74 | 80 |
| Example 2 | 3.7 | 120 | 1.0 | 415 | 1.03 | 0.93 | 0.010 | Ca | Mn, Al | 13.6 | 0.85 | 83 |
| Example 3 | 3.4 | 110 | 0.3 | 411 | 1.03 | 0.93 | 0.003 | Mg | Mn, Al | 13.6 | 0.95 | 84 |
| Comparative Example 1 | 4.4 | 80 | 0.0 | 368 | 1.02 | 0.93 | 0.000 | - | Mn, Al | 13.0 | 0.48 | 75 |
| Comparative Example 2 | 4.6 | 130 | 0.5 | 432 | 1.02 | 0.93 | 0.005 | Ba | Mn, Al | 13.8 | 1.02 | 77 |
| Comparative Example 3 | 4.6 | 110 | 1.0 | 405 | 1.02 | 0.93 | 0.010 | Mg | Mn, Al | 13.6 | 0.90 | 76 |
| Comparative Example 4 | 3.1 | 65 | 0.0 | 362 | 1.09 | 0.93 | 0.000 | - | Mn, Al | 13.1 | 0.58 | 69 |
| Comparative Example 5 | 4.1 | 120 | 5.0 | 408 | 1.02 | 0.93 | 0.050 | Ba | Mn, Al | 13.9 | 0.68 | 76 |

The rate characteristic values for the lithium secondary batteries that used the LiMO samples of Examples 1 to 3, each of which satisfied the conditions (1) and (2), were all 80% or higher. It is thought that this is because cracking was unlikely to occur during electrode production, and a satisfactory capacity was able to be maintained.

Comparative Example 1 did not contain an element M1, and it is thought that because the Me site occupancy exceeded 4.0%, the capacity tended to fall, whereas because the particle strength was less than 100 MPa, cracking was more likely to occur during electrode production, leading to a lower result for the rate characteristic.

Comparative Examples 2, 3 and 5 satisfied the condition (2), but it is thought that because the Me site occupancy exceeded 4.0%, the capacity tended to fall and the rate characteristic result was lower.

Comparative Example 4 satisfied the condition (2), but did not contain an element M1 and had a particle strength of less than 100 MPa, and it is thought that this resulted in cracking during electrode production, causing a lower result for the rate characteristic.

[Reference Signs List]

1 Separator
2 Positive electrode
2a Positive electrode active material layer
2b Positive electrode current collector
3 Negative electrode
4 Electrode group
5 Battery can
6 Electrolyte solution
7 Top insulator
8 Sealing body
10 Lithium secondary battery
21 Positive electrode lead
100 Laminate
110 Positive electrode
111 Positive electrode active material layer
112 Positive electrode current collector
113 External terminal
120 Negative electrode
121 Negative electrode active material layer
122 Negative electrode current collector
123 External terminal
130 Solid electrolyte layer
200 Exterior case
200a Opening
1000 All-solid-state lithium secondary battery

**Claims**

1. A lithium metal composite oxide, which comprises at least Li, Ni and an element M1 which is an alkaline earth metal element, and satisfies (1) and (2) below:

    (1) the Me site occupancy at lithium sites of a layered rock salt crystal structure, determined by Rietveld analysis of diffraction peaks obtained from powder X-ray diffraction using CuKα radiation, is not more than 4.0%;
    (2) the particle strength of the lithium metal composite oxide is greater than 100 MPa but less than 200 MPa.

2. The lithium metal composite oxide according to Claim 1, represented by a compositional formula (A) shown below:

$$Li_aNi_bM1_cM2_{(1-b-c)}O_2 \ldots \qquad (A)$$

(wherein the compositional formula (A) satisfies $0.98 \le a \le 1.10$, $0.60 \le b \le 0.95$ and $0 < c \le 0.05$, M1 represents the element M1, and M2 represents one or more elements selected from the group consisting of Co, Mn, Fe, Cu, Ti, Al, Zn, Sn, Zr, B, Si, Nb, W, Mo, Ta, S and P).

3. The lithium metal composite oxide according to Claim 1 or 2, wherein an amount of the element M1 contained in the lithium metal composite oxide, relative to a total number of moles of elements other than Li and oxygen that constitute the lithium metal composite oxide, is greater than 0 mol% but not more than 5 mol%.

4. The lithium metal composite oxide according to Claim 1 or 2, having a BET specific surface area of less than 1.0 m$^2$/g.

5. The lithium metal composite oxide according to Claim 1 or 2, having a 50% cumulative volume particle size D$_{50}$, determined from a volume-based cumulative particle size distribution curve measured using a laser diffraction and scattering method, of greater than 5 $\mu$m but less than 20 $\mu$m.

6. The lithium metal composite oxide according to Claim 1 or 2, having a peak indicating maximum heat generation in simultaneous differential thermal and thermogravimetric analysis at 400°C or higher.

7. A positive electrode active material for a lithium secondary battery comprising the lithium metal composite oxide according to Claim 1 or 2.

8. A positive electrode for a lithium secondary battery comprising the positive electrode active material for a lithium secondary battery according to Claim 7.

9. A lithium secondary battery comprising the positive electrode for a lithium secondary battery according to Claim 8.

FIG. 1

FIG. 2

## INTERNATIONAL SEARCH REPORT

| International application No. |
| --- |
| **PCT/JP2023/033352** |

### A. CLASSIFICATION OF SUBJECT MATTER

*C01G 53/00*(2006.01)i; *H01M 4/505*(2010.01)i; *H01M 4/525*(2010.01)i
FI:   C01G53/00 A; H01M4/505; H01M4/525

According to International Patent Classification (IPC) or to both national classification and IPC

### B. FIELDS SEARCHED

Minimum documentation searched (classification system followed by classification symbols)

C01G53/00; H01M4/00-4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| A | JP 2007-257985 A (SUMITOMO METAL MINING CO LTD) 04 October 2007 (2007-10-04) entire text, all drawings | 1-9 |
| A | WO 2019/172193 A1 (HITACHI METALS LTD) 12 September 2019 (2019-09-12) entire text, all drawings | 1-9 |
| A | WO 2014/061653 A1 (TODA KOGYO CORP) 24 April 2014 (2014-04-24) entire text, all drawings | 1-9 |
| A | WO 2014/136760 A1 (MITSUI MINING & SMELTING CO., LTD.) 12 September 2014 (2014-09-12) entire text, all drawings | 1-9 |
| A | JP 2019-165002 A (BASF TODA BATTERY MATERIALS LLC) 26 September 2019 (2019-09-26) entire text, all drawings | 1-9 |
| A | JP 2014-528891 A (TIAX LLC) 30 October 2014 (2014-10-30) entire text, all drawings | 1-9 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 November 2023** | **14 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 624 421 A1

## INTERNATIONAL SEARCH REPORT

| International application No. |
| --- |
| **PCT/JP2023/033352** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-156363 A (HITACHI MAXELL) 27 August 2015 (2015-08-27)<br>entire text, all drawings | 1-9 |
| A | WO 2022/044720 A1 (SUMITOMO CHEMICAL COMPANY, LIMITED) 03 March 2022 (2022-03-03)<br>entire text, all drawings | 1-9 |
| A | JP 2009-032467 A (NIPPON CHEMICAL INDUSTRIAL CO., LTD.) 12 February 2009 (2009-02-12)<br>entire text, all drawings | 1-9 |
| A | JP 2009-266712 A (SAKAI CHEM IND CO LTD) 12 November 2009 (2009-11-12)<br>entire text, all drawings | 1-9 |
| A | JP 2014-116161 A (AGC SEIMI CHEMICAL CO LTD) 26 June 2014 (2014-06-26)<br>entire text, all drawings | 1-9 |
| A | JP 2007-242581 A (SANYO ELECTRIC CO LTD) 20 September 2007 (2007-09-20)<br>entire text, all drawings | 1-9 |
| A | JP 2019-512450 A (ECOPRO BM CO LTD) 16 May 2019 (2019-05-16)<br>entire text, all drawings | 1-9 |
| A | JP 2012-230898 A (TODA KOGYO CORP) 22 November 2012 (2012-11-22)<br>entire text, all drawings | 1-9 |
| A | JP 2019-021627 A (GUIZHOU ZHENHUA E-CHEM INC.) 07 February 2019 (2019-02-07)<br>entire text, all drawings | 1-9 |

Form PCT/ISA/210 (second sheet) (January 2015)

20

## INTERNATIONAL SEARCH REPORT
### Information on patent family members

International application No.

**PCT/JP2023/033352**

| Patent document cited in search report | | | Publication date (day/month/year) | Patent family member(s) | | | Publication date (day/month/year) |
|---|---|---|---|---|---|---|---|
| JP | 2007-257985 | A | 04 October 2007 | US | 2007/0248883 | A1 | |
| | | | | entire text, all drawings | | | |
| | | | | EP | 1837936 | A2 | |
| | | | | CN | 101047237 | A | |
| WO | 2019/172193 | A1 | 12 September 2019 | US | 2021/0013505 | A1 | |
| | | | | entire text, all drawings | | | |
| | | | | EP | 3764442 | A1 | |
| | | | | CN | 111837265 | A | |
| | | | | KR | 10-2020-0128673 | A | |
| WO | 2014/061653 | A1 | 24 April 2014 | US | 2015/0249248 | A1 | |
| | | | | entire text, all drawings | | | |
| | | | | EP | 2911224 | A1 | |
| | | | | CA | 2888419 | A | |
| | | | | CN | 104704659 | A | |
| | | | | KR | 10-2015-0073969 | A | |
| WO | 2014/136760 | A1 | 12 September 2014 | US | 2016/0013472 | A1 | |
| | | | | entire text, all drawings | | | |
| | | | | JP | 2016-41653 | A | |
| | | | | KR | 10-2015-0103103 | A | |
| JP | 2019-165002 | A | 26 September 2019 | US | 2020/0411861 | A1 | |
| | | | | entire text, all drawings | | | |
| | | | | WO | 2019/177017 | A1 | |
| | | | | EP | 3767720 | A1 | |
| | | | | KR | 10-2020-0130822 | A | |
| | | | | CN | 111954947 | A | |
| JP | 2014-528891 | A | 30 October 2014 | US | 2014/0197357 | A1 | |
| | | | | entire text, all drawings | | | |
| | | | | WO | 2013/025328 | A2 | |
| | | | | EP | 2744754 | A2 | |
| | | | | CN | 103702942 | A | |
| | | | | KR | 10-2014-0047657 | A | |
| JP | 2015-156363 | A | 27 August 2015 | (Family: none) | | | |
| WO | 2022/044720 | A1 | 03 March 2022 | EP | 4203105 | A1 | |
| | | | | entire text, all drawings | | | |
| | | | | CN | 115885398 | A | |
| | | | | KR | 10-2023-0056668 | A | |
| JP | 2009-032467 | A | 12 February 2009 | US | 2011/0020704 | A1 | |
| | | | | entire text, all drawings | | | |
| | | | | WO | 2009/014158 | A1 | |
| | | | | EP | 2178138 | A1 | |
| | | | | KR | 10-2010-0049556 | A | |
| | | | | CN | 101765934 | A | |
| JP | 2009-266712 | A | 12 November 2009 | (Family: none) | | | |
| JP | 2014-116161 | A | 26 June 2014 | (Family: none) | | | |
| JP | 2007-242581 | A | 20 September 2007 | US | 2007/0218359 | A1 | |
| | | | | entire text, all drawings | | | |
| | | | | KR | 10-2007-0080832 | A | |
| | | | | CN | 101017914 | A | |
| JP | 2019-512450 | A | 16 May 2019 | US | 2019/0123350 | A1 | |
| | | | | entire text, all drawings | | | |
| | | | | WO | 2017/164718 | A1 | |

Form PCT/ISA/210 (patent family annex) (January 2015)

**INTERNATIONAL SEARCH REPORT**
Information on patent family members

International application No.

**PCT/JP2023/033352**

| Patent document cited in search report | | | Publication date (day/month/year) | Patent family member(s) | | | Publication date (day/month/year) |
|---|---|---|---|---|---|---|---|
| | | | | EP | 3442056 | A1 | |
| | | | | KR | 10-2017-0112850 | A | |
| | | | | CN | 108886142 | A | |
| JP | 2012-230898 | A | 22 November 2012 | US | 2014/0087262 | A1 | |
| | | | | entire text, all drawings | | | |
| | | | | WO | 2012/141258 | A1 | |
| | | | | EP | 2698351 | A1 | |
| | | | | TW | 201304259 | A | |
| | | | | CN | 103459321 | A | |
| | | | | KR | 10-2014-0016314 | A | |
| JP | 2019-021627 | A | 07 February 2019 | US | 2019/0020024 | A1 | |
| | | | | entire text, all drawings | | | |
| | | | | EP | 3428125 | A1 | |
| | | | | CN | 107437616 | A | |
| | | | | KR | 10-2019-0006906 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022188173 A
- JP 2020176051 A
- JP 2002201028 A

- WO 2022113904 A1
- JP 2004095400 A

**Non-patent literature cited in the description**

- *Journal of the Mining Industry of Japan*, 1965, vol. 81